# FASCICULE DE BREVET EUROPEEN

(11) **EP 1 091 911 B1**
(45) Date de publication et mention de la délivrance du brevet: **05.12.2001**
(21) Numéro de dépôt: 99922240.9
(22) Date de dépôt: 31.05.1999
(51) Int. Cl.: C02F 3/30, C02F 3/00

(54) **PROCEDE DE REGULATION DE L'AERATION PENDANT LE TRAITEMENT BIOLOGIQUE D'EAUX USEES**
VERFAHREN ZUR REGULIERUNG DER BELÜFTUNG BEI DER BIOLOGISCHEN ABWASSERBEHANDLUNG
METHOD FOR REGULATING AERATION DURING WASTE WATER BIOLOGICAL TREATMENT

(30) Priorité: 02.06.1998 FR 9806918
(43) Date de publication de la demande: 18.04.2001
(73) Titulaire: Suez Lyonnaise des Eaux, 75383 Paris Cédex 08 (FR)
(72) Inventeur: LEFEVRE, Fanny, F-78300 Poissy (FR); CAULET, Philippe, F-78870 Bailly (FR); BUJON, Bruno, F-78400 Chatou (FR); PHILIPPE, Jean-Pierre, F-95220 Herblay (FR)
(74) Mandataire: Armengaud Ainé, Alain
(86) Numéro de dépôt international: FR9901273
(87) Numéro de publication internationale: WO9962832

(56) Documents cités:
- FR-A- 2 756 273
- US-A- 5 304 308
- PATENT ABSTRACTS OF JAPAN vol. 017, no. 321 (C-1072), 18 juin 1993 (1993-06-18) & JP 05 031488 A (SUMITOMO JUKIKAI ENVIROTEC KK;OTHERS: 01), 9 février 1993 (1993-02-09) -& DATABASE WPI Section Ch, Week 9311 Derwent Publications Ltd., London, GB; Class D15, AN 93-088132 XP002091711 & JP 05 031488 A, 9 février 1993 (1993-02-09)
- PATENT ABSTRACTS OF JAPAN vol. 016, no. 349 (C-0967), 28 juillet 1992 (1992-07-28) & JP 04 104896 A (UNITIKA LTD), 7 avril 1992 (1992-04-07)
- PATENT ABSTRACTS OF JAPAN vol. 097, no. 009, 30 septembre 1997 (1997-09-30) & JP 09 122681 A (NISHIHARA ENVIRON SANIT RES CORP), 13 mai 1997 (1997-05-13)

## Description

La présente invention concerne un procédé de régulation de l'aération d'une installation de traitement biologique d'eaux usées en vue de l'élimination des pollutions carbonées et azotées.

On sait que l'assainissement des eaux usées constitue un problème majeur. C'est ainsi que l'Union Européenne a émis une directive (n° 91/271/CEE) relative au traitement des eaux usées urbaines qui déterminent les limites des rejets, dans le milieu naturel, d'eaux usées non traitées. Ainsi, chaque unité de traitement se voie affecter un objectif précis en ce qui concerne la qualité du traitement des eaux, le fait de ne pas atteindre un tel objectif pouvant donner lieu à des pénalités d'ordre financier ou même pénal.

La plupart des installations de traitement d'eaux usées urbaines mettent en oeuvre le procédé à boues activées. Une phase importante de ce procédé réside dans l'élimination du carbone et de l'azote contenus dans les eaux usées, par séquençage des périodes d'aération. On sait en effet, que le problème principal que l'on rencontre dans les installations de traitement d'eaux usées est d'adapter le traitement aux variations du débit d'entrée de l'eau à épurer et à sa charge polluante, afin d'obtenir une qualité constante de l'eau épurée et la quantité minimale réglementaire de rejets polluants dans le milieu naturel. Dans ce but, l'élimination du carbone et de l'azote exige un contrôle très strict et précis de l'aération étant donné que cette élimination doit répondre à deux exigences. Selon la première, on doit assurer une durée d'aération totale suffisante par jour afin de réaliser l'oxydation des composants carbonés des eaux usées et la stabilisation des boues ; la seconde est liée plus directement à la répartition journalière des phases d'aération pour mener à bien l'élimination de l'azote. D'une part, il est nécessaire de respecter une durée suffisante d'un maintien en condition aérobie pour que la boue effectue la nitrification et d'autre part, la dénitrification exige un temps de séjour approprié de l'effluent en condition anoxique. Dans ce but, dans les procédés à boues activées à faible charge mis en oeuvre dans un bassin d'aération unique, l'élimination des composés azotés résulte d'un strict contrôle de l'alternance des séquences aérées et non aérées.

Tout défaut de réglage ou de fonctionnement des dispositifs d'apport d'oxygène se traduit par un dysfonctionnement des stations d'épuration d'eaux résiduaires, avec des répercussions sur la qualité de l'effluent traité, l'équilibre de la biomasse épuratoire et les caractéristiques des boues produites.

Une non adaptation des séquences de l'aération a donc des effets à court terme sur la qualité de l'eau obtenue qui peut contenir alors des composés azotés non oxydés si les périodes d'aération ne sont pas suffisamment longues, ou des nitrates si les périodes d'anoxie sont trop courtes. A l'opposé, lorsque les périodes de non aération sont trop longues, l'effluent à traiter rencontre des conditions anaérobies qui doivent être absolument évitées. En effet, les phénomènes d'anaérobie dans le bassin de traitement, liés à une sous-oxydation de certaines zones entraînent à long terme l'apparition de bactéries filamenteuses et ces micro-organismes induisent une modification de la structure du floc et une diminution de son aptitude à la décantation, ce qui a bien entendu une répercussion défavorable sur la qualité et le coût du traitement. Une autre conséquence d'une durée cumulée d'aération insuffisante concerne la qualité de la boue et, en particulier, conditionne sa stabilité.

On comprend que la régulation de l'aération est l'un des points clés d'un tel procédé de traitement des eaux. Divers procédés de régulation ont été mis en oeuvre. Parmi ceux-ci, on peut mentionner les techniques ci-après :
1) la technique la plus rustique dans le domaine de l'aération des bassins biologiques est la minuterie qui, selon un programme défini par l'exploitant, permet de délivrer de l'oxygène à des moments déterminés de la journée, sans aucune corrélation avec le besoin réel de l'installation,
2) une technique légèrement améliorée est la décision d'aération en fonction d'un seuil haut et d'un seuil bas du potentiel d'oxydo-réduction (potentiel Redox) mesuré sur l'installation : la décision est prise sur une information au moment T, information qui peut être démentie quelques secondes plus tard,
3) une technique plus rigoureuse a été mise au point par la présente titulaire (FR-A-2 724 646). Ce procédé prend en compte divers potentiels Redox, la dérivée de la variation de ce potentiel Rédox et l'historique de la station d'épuration, se rapprochant ainsi de la notion de système expert,
4) d'autres logiques de régulation reposent sur la mesure de la concentration en oxygène dans l'eau à épurer ; cette notion n'ayant pas vraiment de sens, lors des phases de non aération des bassins, la mesure de la concentration en oxygène est alors remplacée par une minuterie qui va assigner un temps de non aération (période d'anoxie), par exemple de 40 à 60 minutes, suivi d'une période au cours de laquelle la régulation s'effectuera effectivement sur la consigne en oxygène, avec par exemple un arrêt progressif des turbines d'aération, une par une,
5) certaines tentatives de régulation ont été effectuées par rapport à la mesure de la concentration des composés ammoniacaux et nitrés dans le bassin d'aération, en caractérisant l'efficacité de la nitrification et de la dénitrification et, par suite, les besoins en oxygène de la station d'épuration.

La mise en oeuvre des diverses techniques de l'art antérieur mentionnées ci-dessus révèle de nombreux inconvénients qui témoignent de leurs limitations. Parmi ces inconvénients, on citera notamment les suivants :
1) l'asservissement à une minuterie ne tient évidemment aucun compte des variations de charge polluante infligées à la station par l'irrégularité des apports en eau à traiter.
2) la méthode des seuils Rédox ne tient pas compte des historiques de la station d'épuration, tels que les surcharges temporaires, les pannes aléatoires d'équipement, etc...
3) le procédé selon FR-A-2 724 646 permet d'assurer une dépollution efficace, sur la pollution carbonée, au plan nitrification et au plan dénitrification. Cependant, l'objectif de ce procédé est d'assurer une suffisance d'aération qui se traduit de fait, toujours par un excès d'apport en oxygène. Or, cet excès peut être pénalisant d'un point de vue économique. Par ailleurs, du point de vue du traitement des eaux, la phase de l'aération se trouve affectée car elle démarre en présence d'une teneur relativement élevée en oxygène, de 7 à 8 mg/l., qu'il faut éliminer avant de commencer à utiliser l'oxygène des nitrates. Pour une même durée de dénitrification, la phase d'arrêt de l'aération sera d'autant plus longue, et le temps effectif de traitement est réduit sur une journée.
4) la mise en oeuvre de la technique reposant sur une simple mesure de la concentration en oxygène de l'eau à épurer ne permet pas de contrôler l'état d'avancement des réactions de dénitrification qui interviennent dans les bassins de boues activées, puisqu'il y a nécessité d'une concentration nulle en oxygène pour l'accomplissement de cette phase. De plus, les concentrations en oxygène nécessaires pour assurer la nitrification peuvent évoluer dans une gamme allant de 3 à 7 mg/l. en fonction notamment de l'état d'oxydation des boues présentes dans le réacteur biologique.
5) la technique basée sur la mesure de la concentration des composés ammoniacaux et nitrés dans le bassin d'aération n'est envisageable que sur de grandes stations, compte-tenu du prix élevé des équipements. Par ailleurs, cette technique ne tient aucun compte de l'état d'oxydation des boues alors qu'une mesure du potentiel d'oxydoréduction selon FR-A-2 724 646 permet d'évaluer l'état physiologique des boues.

Les inconvénients des solutions selon l'art antérieur mentionné ci-dessus conduisent donc à rechercher des moyens permettant d'optimiser les différentes réactions dans les bassins d'aération de la station d'épuration, tout en gérant plus judicieusement les apports d'oxygène à cette dernière. C'est là le problème résolu par la présente invention.

Celle-ci a donc pour objet un procédé de régulation de l'aération dans une installation de traitement biologique d'eaux usées, mettant en oeuvre une étape d'élimination du carbone, une étape de nitrification et une étape de dénitrification caractérisé en ce qu'il comporte les étapes suivantes :
1) mesurer en continu la valeur du potentiel d'oxydoréduction du milieu traité, permettant d'actionner ou non les moyens d'aération ;
2) au cours des phases d'aération, mesurer la concentration en oxygène et exploiter sa valeur, conjointement avec celles du potentiel d'oxydo-réduction pour :
   - maintenir l'aération si la concentration en oxygène correspond à une plage de consigne ;
   - diminuer l'aération si la concentration en oxygène est supérieure à la plage de consigne et,
   - augmenter l'aération si la concentration en oxygène est inférieure à la plage de consigne et,
3) réaliser une auto adaptation des consignes d'oxygène en comparant, lors de la transition du potentiel d'oxydo-réduction « nitrification partielle / nitrification totale », la concentration réelle en oxygène, avec la plage de consigne du système et en ajustant la valeur de la consigne en fonction du besoin réel en oxygène dudit système.

Selon la présente invention, lorsque la transition Rédox « nitrification partielle/nitrification totale » intervient dans la zone inférieure de la plage de consigne de la concentration en oxygène, on réduit la valeur de cette consigne.

Selon l'invention, lorsque la valeur de la transition Rédox « nitrification partielle/nitrification totale » n'est pas atteinte pour la valeur de consigne de la concentration en oxygène, cette dernière est augmentée.

On comprend que le procédé objet de la présente invention constitue une combinaison d'un procédé tel que défini dans FR-A-2 724 646, comportant un suivi de la dérivée de la variation du potentiel d'oxydo-réduction, avec un suivi du signal « concentration en oxygène » uniquement en cours de phase d'aération. Schématiquement, l'analyse des valeurs du potentiel d'oxydo-réduction permet de définir la durée des séquences de marche et d'arrêt de l'installation et l'analyse des valeurs de la concentration en oxygène permet de commander la puissance devant être mise en jeu au cours des phases d'aération.

Selon l'invention, on ajoute à cette combinaison mesure du potentiel Rédox + mesure de la concentration en oxygène en valeur absolue [ Q₂], la comparaison en continu desdits paramètres qui permet de déduire et de confirmer la cohérence des informations recueillies sur la station. Ainsi, grâce à la mise en oeuvre du procédé selon l'invention, on a accès à diverses informations et possibilités d'interventions primordiales relatives à l'état de la station telles que notamment :
- le contrôle de la fiabilité des capteurs du potentiel Rédox et de la concentration en oxygène ;
- le contrôle de la fiabilité des équipements ou l'identification des surcharges de pollution ;
- l'analyse plus fine de l'état biologique des boues,
- la possibilité de réajuster les valeurs de consigne de la concentration en oxygène, en fonction des performances des boues et,
- aborder la phase dénitrification avec une teneur relativement faible en oxygène résiduel et assurer un démarrage rapide de la phase dénitrification.

D'autres caractéristiques et avantages de l'invention ressortiront de la description faite ci-après en référence aux dessins annexés sur lesquels :
- la figure 1 est un schéma faisant ressortir les différentes étapes du procédé de l'invention telles que définies ci-dessus,
- la figure 2 est un schéma permettant de comprendre la mise en oeuvre du procédé de l'invention et,
- la figure 3 est une courbe illustrant les variations du seuil de la concentration en oxygène en fonction du temps, relevées sur une installation industrielle.

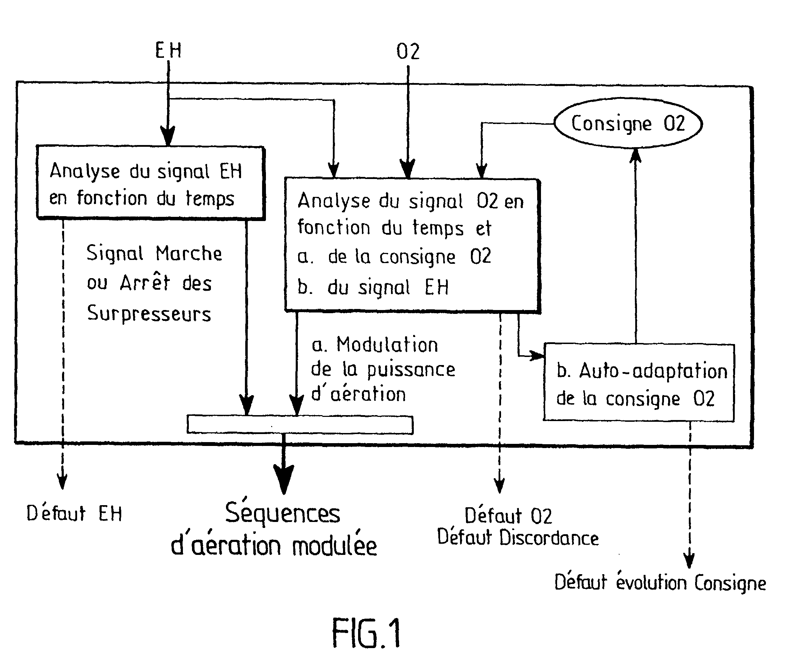

Ainsi qu'on l'a mentionné ci-dessus, les différentes étapes du procédé de l'invention, illustrées par le schéma de la figure 1 peuvent être résumées de la façon suivante :

Tout d'abord, lors de la phase de démarrage, on assure une aération au maximum des possibilités de l'installation de manière à effectuer un apport massif d'oxygène : l'expérience montre que cet apport massif est utile au bon fonctionnement de l'épuration.

### Etape 1:

Mesure en continu de la valeur du potentiel Rédox (EH) du milieu traité permettant d'actionner ou non des moyens d'aération (surpresseur d'aération).

### Etape 2 :

Examen de ce potentiel Rédox : si la valeur de ce potentiel est élevée, la nitrification et l'élimination du carbone se font bien ; si la valeur du potentiel Rédox est basse, ceci est du à une nitrification et à une élimination du carbone insuffisantes, ce qui nécessite de procéder à un examen de la composante oxygène de la régulation.

### Etape 3 :

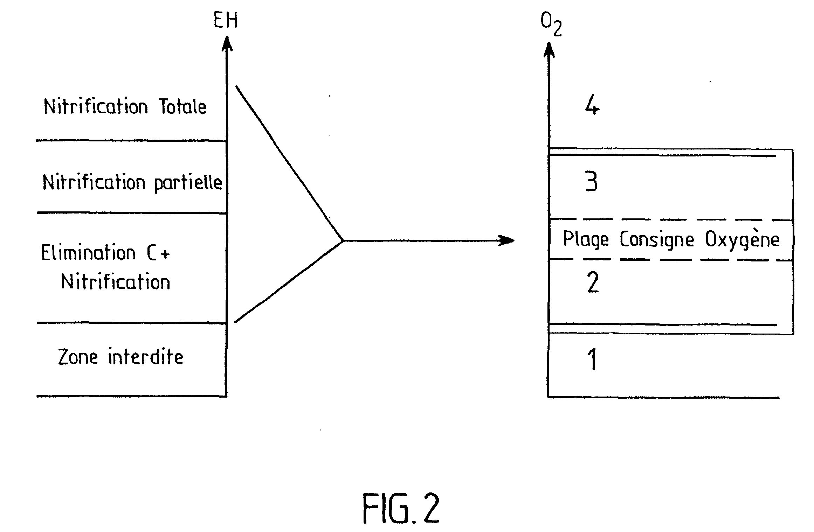

Procéder à une mesure de la concentration en oxygène du milieu traité et à l'examen de cette concentration (voir la figure 2). Les cas suivants peuvent se présenter :
a) soit la valeur de la concentration en oxygène [O₂] se situe dans la zone de la figure 2 dénommée « Plage Consigne Oxygène », il faut maintenir la puissance d'aération,
b) soit la valeur de la concentration en oxygène [O₂] se situe dans la zone désignée par la référence 2 sur la figure 2 (c'est-à-dire en dessous de la plage de consigne de [O₂]) : il faut augmenter la puissance d'oxygénation ou, à défaut, maintenir les surpresseurs d'aération au maximum de leur fonctionnement afin d'apporter la quantité nécessaire d'oxygène,
c) soit la valeur [ O₂] est située dans la zone désignée par la référence 3 sur la figure 2 (c'est-à-dire au dessus de la plage de consigne de [ O₂]), le potentiel Rédox peut être insuffisant mais la consigne en oxygène est dépassée : on réduit l'aération ou, à défaut, on maintient les surpresseurs d'aération à leur minimum de fonctionnement,
d) soit la valeur de [ O₂] est située dans la zone désignée par la référence 1 sur la figure 2 (potentiel Rédox et concentration en oxygène trop bas) cette situation peut correspondre à une surcharge de la station (forte respiration des boues) ou à une défaillance des équipements ou des capteurs : dans ce cas, l'invention prévoit le déclenchement d'une alarme et,
e) soit la valeur [ O₂] est située dans la zone désignée par la référence 4 sur la figure 2 : la simultanéité d'une forte teneur en oxygène avec un potentiel Rédox moyen peut indiquer un défaut des capteurs ou encore une intoxication de la biomasse (faible respiration des boues) : dans ce cas, l'invention prévoit également le déclenchement d'une alarme.

### Dernière étape :

On a vu ci-dessus que l'invention prévoyait une étape additionnelle résidant dans l'auto-adaptation des consignes de la concentration en oxygène.

Lors de la transition du potentiel d'oxydoréduction de la zone « nitrification partielle » à la zone « nitrification totale » l'invention prévoit d'effectuer une mesure de la concentration en oxygène du système afin de modifier les valeurs de consignes en oxygène, ce qui permet de réévaluer les besoins réels en oxygène nécessaires à l'accomplissement des réactions de nitrification et à l'oxydation complète des constituants des boues.

Si cette transition Rédox intervient dans les zones 1 ou 2 (figure 2) des valeurs de concentration en oxygène, le besoin en oxygène requis par la biomasse est faible et, selon l'invention, on réduit la consigne d'oxydation, ce qui permet de favoriser une économie d'énergie relative à l'aération.

A l'inverse, lorsque la valeur de la transition Rédox ne peut pas être régulièrement atteinte dans des conditions de consigne de concentration en oxygène proposées, il existe un besoin important en oxygène et il est donc nécessaire d'augmenter la valeur de la consigne [ O₂]. Cette augmentation permet de sécuriser le procédé et de favoriser dans ce cas, une réoxygénération des boues.

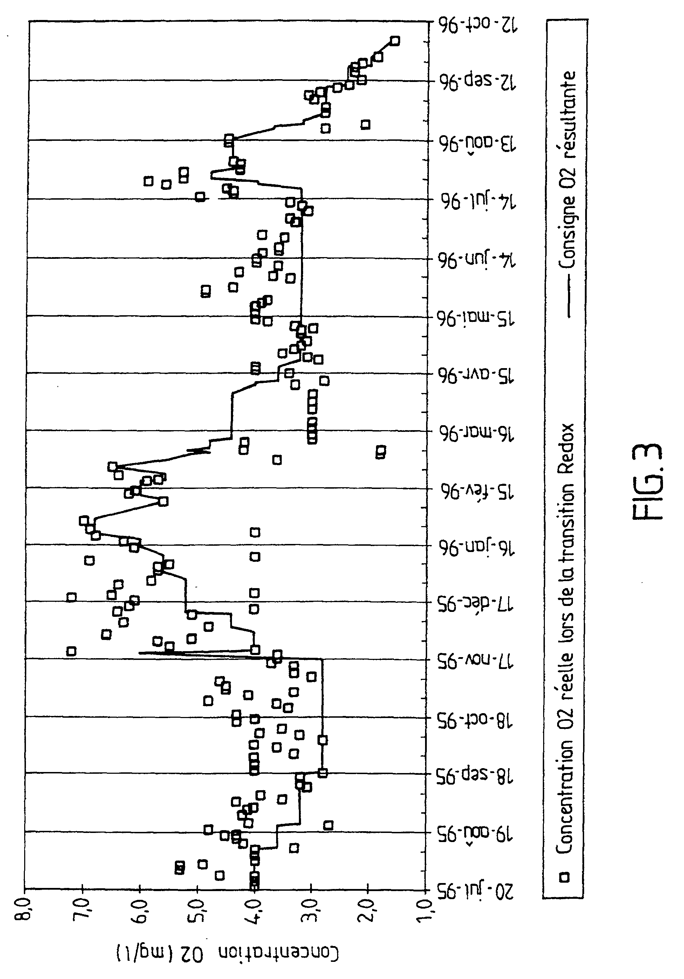

Sur la figure 3 des dessins annexés, on a représenté l'évolution du seuil de la concentration en oxygène, en fonction du temps, cette figure permettant de faire ressortir comment, par la mise en oeuvre du procédé de l'invention, on obtient une auto-adaptation des seuils de la consigne [ O₂].

Cette figure 3 représente les évolutions des seuils d'oxygène sur la durée de la période d'étude (sensiblement 1 an). Les points ■ dits de valeur réelle représentent les concentrations en oxygène dissous atteintes lorsque le potentiel Rédox indiquait un passage de « nitrification partielle » à « nitrification complète » dans la « PHASE 3 ». La ligne continue et plus stable représente la consigne en oxygène définie par la logique de gestion, sur la base des valeurs réelles. Les variations sont ici amorties, de façon à limiter les modifications de consignes tout en fiabilisant le procédé.

Il est important de noter la gamme de variation de cette valeur de la consigne [O₂] qui traduit l'évolution importante des besoins réels de la biomasse (rajeunissement de populations...). De fait, la courbe de la figure 3 enseigne que le système biologique peut très bien fonctionner en nitrification totale, avec une teneur en oxygène dissous de l'ordre de 2 à 3 mg/l. (cas de boues « âgées »), alors que dans certains cas (boues plus « jeunes); une teneur de 5 à 6 mg/l. s'avérera insuffisante pour assurer la nitrification totale. L'invention permet de surmonter cette difficulté et elle conduit à une auto-adaptation des conditions de fonctionnement.

Dans le tableau ci-après, on a indiqué les résultats comparatifs, obtenus sur trois installations en mettant respectivement en oeuvre un procédé de traitement biologique d'eaux usées sans régulation automatique (A), avec une régulation automatique du potentiel Rédox EH uniquement (B) et avec une régulation automatique potentiel Rédox EH et concentration en oxygène selon la présente invention (C). Ce tableau fait clairement ressortir les avantages, notamment économiques apportés par la mise en oeuvre du procédé, objet de la présente invention.

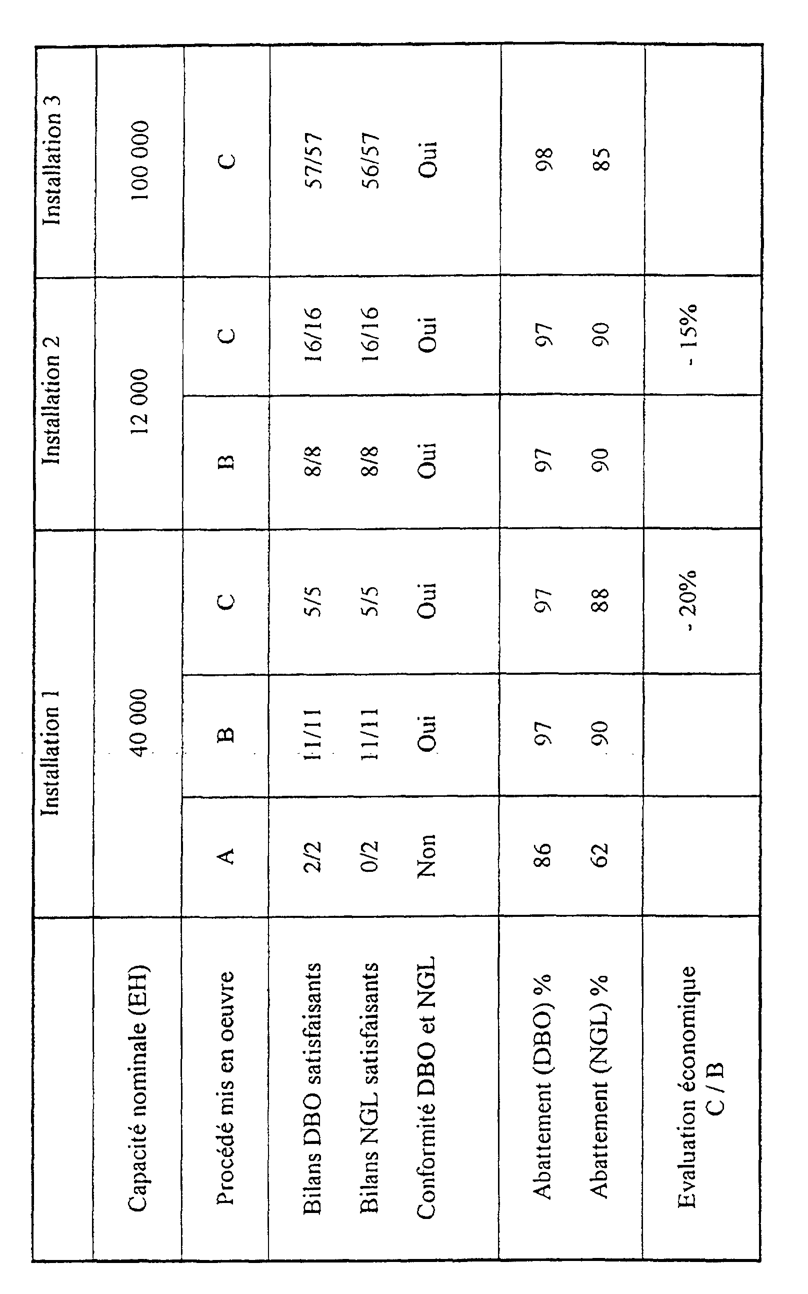

Parmi les avantages apportés par le procédé objet de l'invention, on peut citer notamment les suivants :
- Modulation de la puissance d'aération fournie, nécessaire à l'accomplissement des réactions de traitement des polluants carbonés et azotés ;
- Possibilité de vérification de la cohérence des informations reçues et de détection des événements limitants, survenant sur la station d'épuration et,
- Possibilité, par une expertise plus fine des besoins des boues, d'effectuer une auto-adaptation des propres consignes de régulation du système en vue de sa fiabilisation.

Il demeure bien entendu que la présente invention n'est pas limitée aux exemples de réalisation décrits et/ou mentionnés ci-dessus mais qu'elle en englobe toutes les variantes qui entrent dans le cadre de la portée des revendications annexées.

## Revendications

1. Procédé de régulation de l'aération dans une installation de traitement biologique d'eaux usées, mettant en oeuvre une étape d'élimination du carbone, une étape de nitrification et une étape de dénitrification **caractérisé en ce qu'**il comporte les étapes suivantes :
1) mesurer en continu la valeur du potentiel d'oxydo-réduction du milieu traité, permettant d'actionner ou non les moyens d'aération ;
2) au cours des phases d'aération, mesurer la concentration en oxygène et exploiter sa valeur, conjointement avec celles du potentiel d'oxydo-réduction pour :
- maintenir l'aération si la concentration en oxygène correspond à une plage de consigne ;
- diminuer l'aération si la concentration en oxygène est supérieure à la plage de consigne et,
- augmenter l'aération si la concentration en oxygène est inférieure à la plage de consigne et,
3) réaliser une auto adaptation des consignes d'oxygène en comparant, lors de la transition du potentiel d'oxydo-réduction « nitrification partielle / nitrification totale », la concentration réelle en oxygène, avec la plage de consigne du système et en ajustant la valeur de la consigne en fonction du besoin réel en oxygène dudit système.

2. Procédé selon la revendication 1, **caractérisé en ce que**, lorsque la transition du potentiel d'oxydo-réduction de la zone nitrification partielle à la zone nitrification totale intervient dans la zone inférieure de la valeur de consigne de la concentration en oxygène, on réduit la valeur de cette consigne.

3. Procédé selon la revendication 1 **caractérisé en ce que**, lorsque la valeur de la transition du potentiel d'oxydo-réduction de la zone : nitrification partielle à la zone nitrification totale n'est pas atteinte pour la valeur de consigne de la concentration en oxygène, cette dernière est augmentée.

4. Procédé selon la revendication 1 **caractérisé en ce que**, lorsque la valeur de la concentration en oxygène est trop basse de même que le potentiel d'oxydo-réduction, une alarme est déclenchée.

5. Procédé selon la revendication 1 **caractérisé en ce que** lors de la simultanéité d'une forte teneur en oxygène et d'un potentiel d'oxydo-réduction faible, une alarme est déclenchée.

## Patentansprüche

1. Verfahren zur Regelung der Belüftung in einer biologischen Abwasserbehandlungsanlage, in welcher eine Stufe zur Kohlenstoffentfernung, eine Nitrifikationsstufe und eine Denitrifikationsstufe durchgeführt wird, **dadurch gekennzeichnet, dass** es die Stufen
1) kontinuierliche Messung des Oxidations-Reduktions-Potentials des zu behandelnden Mediums, die es ermöglicht, gegebenenfalls die Belüftungsmittel arbeiten zu lassen,
2) während der Belüftungsphasen Messung der Sauerstoffkonzentration und Benutzen ihres Wertes zusammen mit den Werten des Oxidations-Reduktions-Potentials, um
- die Belüftung aufrechtzuerhalten, wenn die Sauerstoffkonzentration einem Sollwertbereich entspricht,
- die Belüftung zu verringern, wenn die Sauerstoffkonzentration größer als der Sollwertbereich ist, und
- die Belüftung zu verstärken, wenn die Sauerstoffkonzentration niedriger als der Sollwertbereich ist, und
3) Realisierung einer selbsttätigen Anpassung der Sauerstoffsollwerte, indem beim Übergang des Oxidations-Reduktions-Potentials von "partieller Nitrifikation/vollständiger Nitrifikation" die tatsächliche Sauerstoffkonzentration mit dem Sollwertbereich des Systems verglichen und der Sollwert in Abhängigkeit vom realen Sauerstoffbedarf des Systems eingestellt wird, umfasst.

2. Verfahren nach Anspruch 1, **dadurch gekennzeichnet, dass,** wenn der Übergang des Oxidations-Reduktions-Potentials vom partiellen Nitrifikationsbereich zum vollständigen Nitrifikationsbereich in den unteren Bereich des Sollwerts der Sauerstoffkonzentration gelangt, die Höhe dieses Sollwerts verringert wird.

3. Verfahren nach Anspruch 1, **dadurch gekennzeichnet, dass,** wenn der Übergangswert des Oxidations-Reduktions-Potentials vom partiellen Nitrifikationsbereich zum vollständigen Nitrifikationsbereich vom Sollwert der Sauerstoffkonzentration nicht erreicht wird, dieser erhöht wird.

4. Verfahren nach Anspruch 1, **dadurch gekennzeichnet, dass,** wenn sowohl Sauerstoffkonzentration als auch Oxidations-Reduktions-Potential zu niedrig sind, ein Alarm ausgelöst wird.

5. Verfahren nach Anspruch 1, **dadurch gekennzeichnet, dass** bei Gleichzeitigkeit von hohem Sauerstoffgehalt und niedrigem Oxidations-Reduktions-Potential ein Alarm ausgelöst wird.

## Claims

1. Process for regulating aeration in a waste water biological treatment installation, involving a carbon elimination stage, a nitrification stage and a denitrification stage, **characterized in that** it comprises the following stages:
1) continuously measuring the redox potential value of the treated medium, so as to permit the actuation or not of the aeration means,
2) during the aeration phases, measuring the oxygen concentration and exploiting its value, together with those of the redox potential for:
- maintaining aeration if the oxygen concentration corresponds to a set value range,
- reducing aeration if the oxygen concentration exceeds the set value range and
- increasing aeration if the oxygen concentration is below the set value range and
3) effecting an auto-adaptation of the oxygen set values by comparing, during the "partial nitrification/total nitrification" redox potential transition, the real oxygen concentration with the set value range of the system and adjusting the set value as a function of the real oxygen requirements of said system.

2. Process according to claim 1, **characterized in that**, when the redox potential transition of the partial nitrification to the total nitrification zone intervenes in the lower range of the set value of the oxygen concentration, the set value is reduced.

3. Process according to claim 1, **characterized in that**, when the transition value of the redox potential of the partial nitrification to total nitrification range is not reached for the oxygen concentration set value, the latter is increased.

4. Process according to claim 1, **characterized in that**, when the oxygen concentration value and the redox potential value are too low, an alarm is triggered.

5. Process according to claim 1, **characterized in that** during the simultaneity of a high oxygen content and a low redox potential, an alarm is triggered.
